# EUROPEAN PATENT APPLICATION

(11) **EP 2 560 046 A2**
(43) Date of publication of application: **20.02.2013**
(21) Application number: 12161323.6
(22) Date of filing: 26.03.2012
(51) Int. Cl.: G03B 3/00, H04N 9/31

(54) **Focus regulating apparatus of projector and projector using the same**

(30) Priority: 17.08.2011 KR 20110081495
(71) Applicant: Samsung Electronics Co., Ltd., Suwon-si, Gyeonggi-do, 443-742 (KR)
(72) Inventor: Jung, Joon-young, Anyany-si, Gyeonggi-do (KR); Lim, Jae-geun, Suwon-si, Gyeonggi-do (KR); Park, Jun-seok, Suwon-si, Gyeonggi-do (KR)
(74) Representative: Misselbrook, Paul

(57) **Abstract**

Disclosed are a focus regulating apparatus for use with a projector and a projector using the same. The apparatus has a structure which is designed to overcome asymmetry in focus regulation due to the optical characteristics of the projector. The focus regulating apparatus of a projector includes: a focus regulator, which is provided in a projection lens unit of a projector main body so that the focus can be regulated by rotating a lens barrel of the projection lens unit; and an actuator, which gears with the focus regulator and moves rectilinearly with respect to the projector main body, thereby causing the focus regulator to rotate. The rotation of the focus regulator is varied when the actuator rectilinearly moves at a constant speed. The apparatus thus enables an asymmetry in focus regulation to be overcome when a screen size for the projector is adjusted.

## Description

### CROSS-REFERENCE TO RELATED APPLICATION

This application claims priority from Korean Patent Application No. 10-2011-0081495, filed on August 17, 2011 in the Korean Intellectual Property Office, the disclosure of which is incorporated herein by reference in its entirety.

### BACKGROUND

### Field

Apparatuses and methods consistent with exemplary embodiments relate to a focus regulating apparatus for use with a projector and a projector using the same, and more particularly, to a focus regulating apparatus which has a structure designed to overcome asymmetry in focus regulation due to the optical characteristics of the projector.

### Description of the Related Art

A projector is a display apparatus that enlarges an image through a projection lens unit and projects it on to a screen.

Recently, a compact-sized portable projector handy for a user to carry has become increasingly popular. The projector regulates the size of an image projected on the screen according to distances from the screen, and focus regulation may also be needed, depending on the distances.

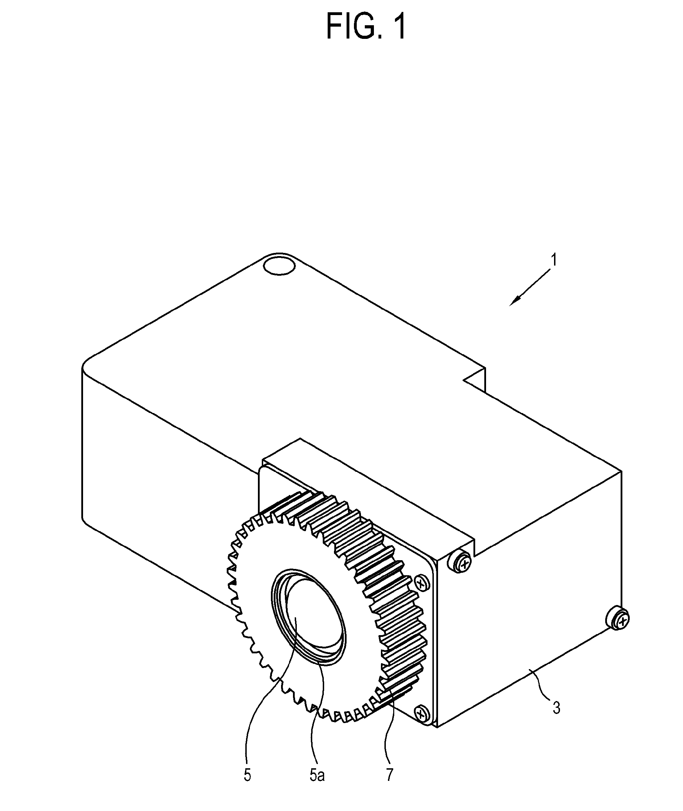

FIG. 1 is a perspective view of a conventional projector having a structure that includes a spur gear to be used for adjusting a focus. As shown therein, the projector 1 includes a housing 3, a projection lens unit 5 positioned in the housing 3, and a spur gear 7 for regulating the focus. The projection lens unit 5 includes plural sheets of lenses and a prism, positions of which are variable relative to each other, in a body tube 5a. The spur gear 7 is positioned outside of the body tube 5a, and rotates clockwise or counterclockwise to regulate the focus of the projection lens unit 5. In particular, the conventional projector 1 has a structure by which the lens rectilinearly moves along an optical axis as the spur gear 7 rotates, so that the distance between the lens and the prism can be varied to regulate the focus.

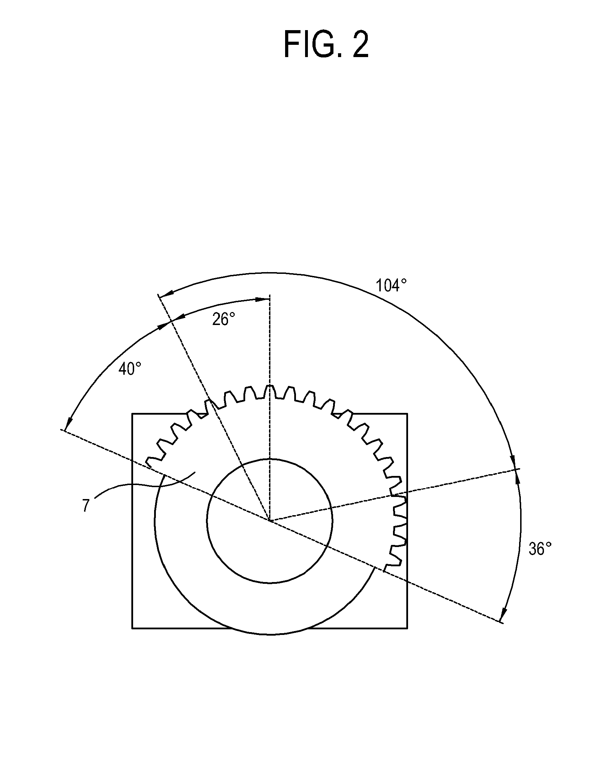

The conventional projector 1 has asymmetry between the rotation of the spur gear 7 and the regulation of the focus as shown in FIG. 2 and the following Table 1.

**Table 1**

| Screen size (length of diagonal) | 10" | 30" (reference size) | 60" | 80" |
|---|---|---|---|---|
| BFL | 0.6314 | 0.4 | 0.3464 | 0.3276 |
| ΔBEL variation | 0.2314 | - | -0.0536 | -0.0724 |
| Rotation angle of spur gear | 78° | - | - | 26° |
| Margin angle | 40° | - | - | 36° |

1 In Table 1 above, "BFL" refers to the back focal length of the projection lens unit, and "ΔBFL variation" refers to variation in the BFL of the projection lens unit when the focus is regulated. Further, "rotation angle of spur gear" refers to a rotation angle of the spur gear 7 for focus regulation on a different-sized screen with respect to the rotation angle of the spur gear 7 for focus regulation on a reference-sized screen (reference size : 30").

Referring to Table 1 and FIG. 2, if the focus is regulated by the spur gear 7 while the size of the screen, as indicated by a length of a diagonal for each respective screen, is varied from the reference size 30" into 10", 60" and 80", the ΔBFL variation is proportional to the rotation of the spur gear 7, but the magnitude of the rotation angle of the spur gear 7 is asymmetrical with respect to the reference screen size and therefore not proportional to the corresponding change in the screen size. For example, if the screen size is decreased from the reference size corresponding to a diagonal length of 30" to a size corresponding to a diagonal length of 10", i.e., a decrease in the diagonal length by 20", the spur gear 7 must rotate through an angle of 78°. Conversely, if the screen size is increased from 30" to 80", i.e., an increase in the diagonal length by 50", the spur gear 7 must rotate through an angle of only 26°. Accordingly, sensitivity to the focus regulation becomes greater, thereby making it difficult to regulate the focus.

### SUMMARY

Accordingly, one or more exemplary embodiments provide a regulating apparatus for use with a projector and a projector using the same, a structure of which is convenient for a user to regulate a focus, and which is designed to overcome asymmetry in focus regulation when a screen size for the projector is increased or decreased.

The foregoing and/or other aspects may be achieved by providing a focus regulating apparatus for use with a projector which includes a projector main body and a projection lens unit provided in the projector main body. The apparatus includes: a focus regulator which is provided in the projection lens unit such that the focus is regulated by rotating a lens barrel of the projection lens unit; and an actuator which gears with the focus regulator. The actuator is configured to move rectilinearly with respect to the projector main body to cause the focus regulator to rotate. A rotation of the focus regulator is varied when the actuator rectilinearly moves at a constant speed.

The focus regulator may include a multi-stage spur gear including a first plurality of gear trains. Each of the first plurality of gear trains may have a different respective radius. The actuator may include a multi-stage rack gear including a second plurality of gear trains. Each of the second plurality of gear trains may have a respective engaging section which engages with a corresponding one of the first plurality of gear trains.

The multi-stage spur gear may include a first spur gear train having a first radius; and a second spur gear train having a second radius different from the first radius. The multi-stage rack gear may include a first rack gear train arranged to engage with the first spur gear train; and a second rack gear train positioned apart from the first rack gear train and arranged to engage with the second spur gear train.

The multi-stage spur gear may include a first spur gear train having a first radius, a second spur gear train having a second radius different from the first radius, and a third spur gear train different from both of the first radius and the second radius. The multi-stage rack gear may include a first rack gear train arranged to engage with the first spur gear train, a second rack gear train positioned apart from the first rack gear train and arranged to engage with the second spur gear train, and a third rack gear train positioned apart from both of the first and second rack gear trains and arranged to engage with the third spur gear train.

The focus regulator and the actuator may be configured such that a rotation angle of the focus regulator which corresponds to an image projected by the projection lens unit larger than a reference-sized screen by a predetermined proportion is smaller than a rotation angle of the focus regulator which corresponds to an image smaller than the reference-sized screen by the predetermined proportion.

In another aspect, a projector for projecting an image to a screen is provided. The projector includes: a projector main body; a projection lens unit which is provided in the projector main body, and which includes a plurality of sheets of lenses and a lens barrel supporting the lenses; and the foregoing apparatus, which regulates a focus by rotating the lens barrel.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a perspective view showing a related art projector having a focus regulation structure which includes a spur gear;

FIG. 2 is a view for explaining an asymmetry between the rotation of the spur gear and the regulation of the focus in the projector of the FIG. 1;

FIG. 3 is a schematic perspective view of a projector employing a focus regulating apparatus according to an exemplary embodiment;

FIG. 4 is a partial cross-section view of a projector according to an exemplary embodiment;

FIGs. 5 and 6 are perspective views respectively showing the spur gear and a rack gear corresponding thereto in a focus regulating apparatus according to an exemplary embodiment;

FIGs. 7A, 7B, and 7C are views for illustrating focus regulation obtained by using the spur gear of FIG. 5 and the rack gear of FIG. 6;

FIGs. 8 and 9 are perspective views respectively showing the spur gear and a rack gear corresponding thereto in the focus regulating apparatus according to an exemplary embodiment; and

FIG. 10 is a view for illustrating engagement between the spur gear of FIG. 8 and the rack gear of FIG. 9.

### DETAILED DESCRIPTION OF EXEMPLARY EMBODIMENTS

A focus regulating apparatus for use with a projector and a projector using the same according to exemplary embodiments are described below in detail with reference to accompanying drawings.

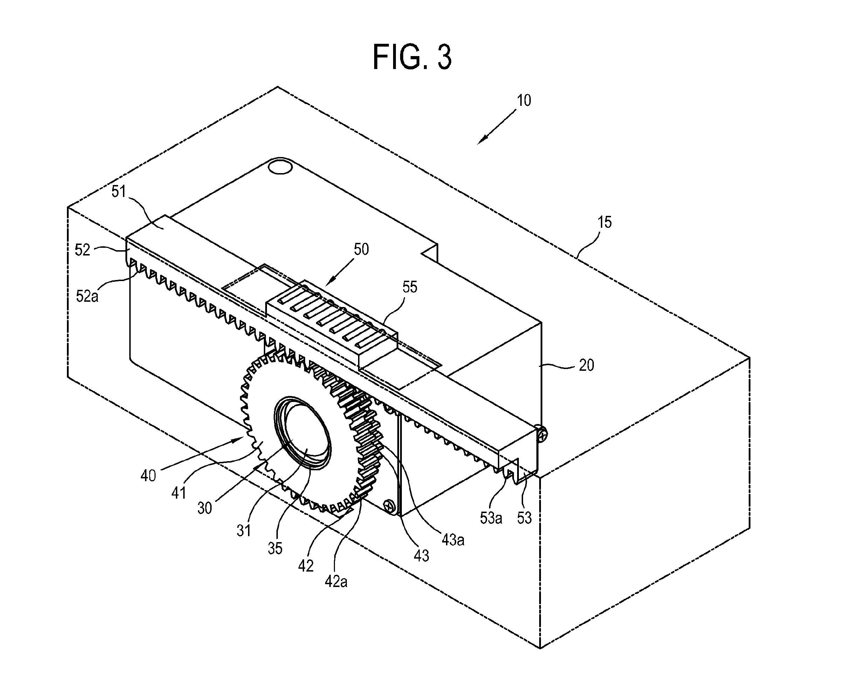

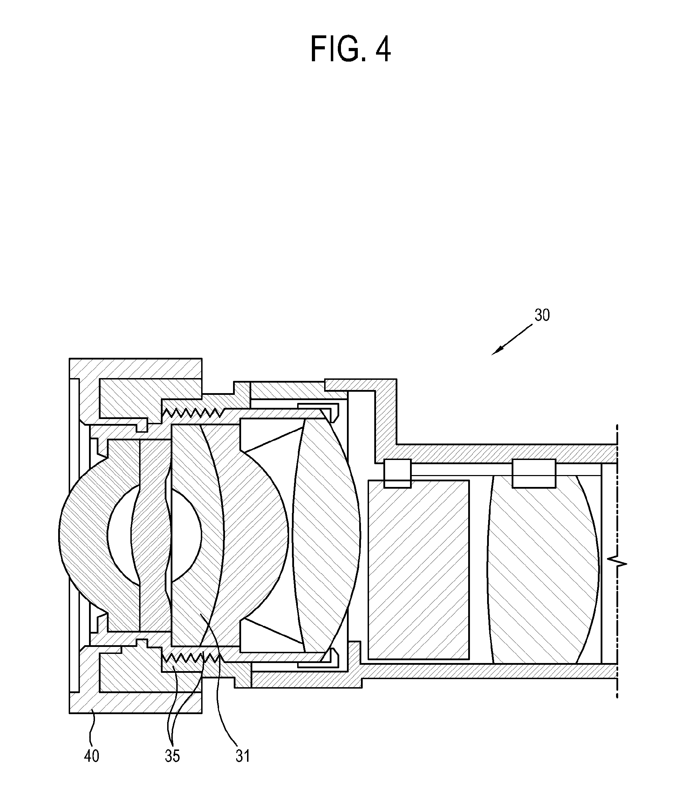

FIG. 3 is a schematic perspective view of a projector employing a focus regulating apparatus according to an exemplary embodiment, and FIG. 4 is a partial cross-section view of a projector according to an exemplary embodiment.

As shown in FIG. 3 and FIG. 4, the projector 10 according to an exemplary embodiment, which projects an image on a screen (not shown), includes a projector main body 20, a projection lens unit 30 positioned in the projector main body 20, and a focus regulating apparatus for which a position is varied depending on distances between the screen and the projector 10.

In addition, the projector 10 includes a housing 15 for covering the main body 20 and the apparatuses 40 and 50 for regulating the focus.

The projection lens unit 30 includes a plurality of sheets of lenses 31, and a lens barrel 35 for supporting these lenses 31. In particular, some lenses from among the plurality of sheets of lenses 31 are positioned to reciprocate with respect to an optical axis as the lens barrel 35 rotates. Thus, the lens barrel 35 is rotated by the focus regulating apparatus, so that the focus can be regulated.

The focus regulating apparatus includes a focus regulator 40 and an actuator 50. The focus regulator 40 is provided in the projection lens unit 30 and rotates the lens barrel 35. The actuator 50 moves rectilinearly with respect to the projector main body 20, thereby causing the focus regulator 40 to rotate. The actuator 50 may further include a grip 55 exposed to the outside of an opening of the housing 15. In this case, a user may regulate the focus by causing the actuator 50 to move rectilinearly through the grip 55.

In particular, the focus regulator 40 and the actuator 50 are configured so that the rotation of the focus regulator 40 can be varied, either on a section-by-section basis, or gradually when the actuator 50 rectilinearly moves at a constant speed.

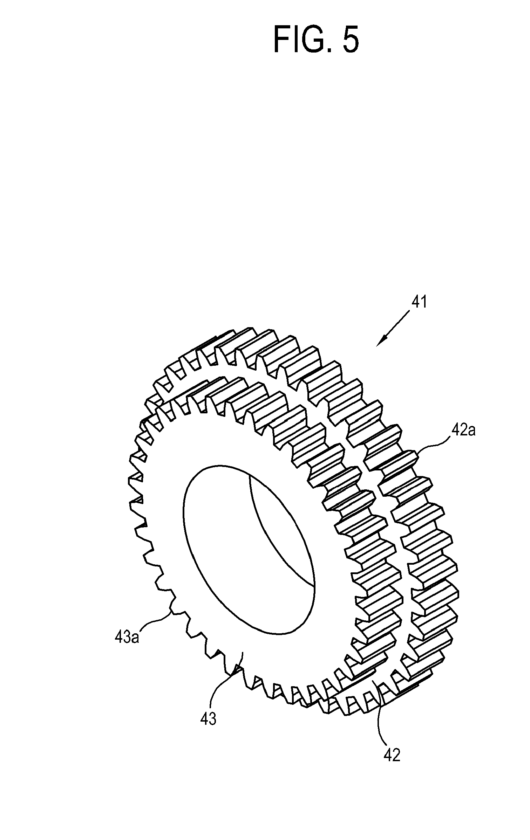

Referring to FIGs. 5 through 10, in the focus regulating apparatus for use with the projector according to an exemplary embodiment, the focus regulator 40 includes a multi-stage spur gear 41 having a first plurality of gear trains, wherein each of the first plurality of gear trains has a different respective radius. The actuator 50 includes a multi-stage rack gear 51 having a second plurality of gear trains, wherein each of the second plurality of gear trains includes an engaging section which engages with a corresponding one of the first plurality of gear trains in the multi-stage spur gear 41.

As shown in FIG. 5, the multi-stage spur gear 41 includes a first spur gear train 42 having a first radius, and a second spur gear train 43 having a second radius different from the first radius of the first spur gear train 42. In particular, the first and second spur gear trains 42 and 43 are coaxially arranged, and the radius of the second spur gear train 43 is smaller than that of the first spur gear train 42.

In some embodiments, each of a plurality of first gear teeth 42a included in the first spur gear train 42 may have the same shape, size and arrangement as each of a plurality of second gear teeth 43a included in the second spur gear train 43.

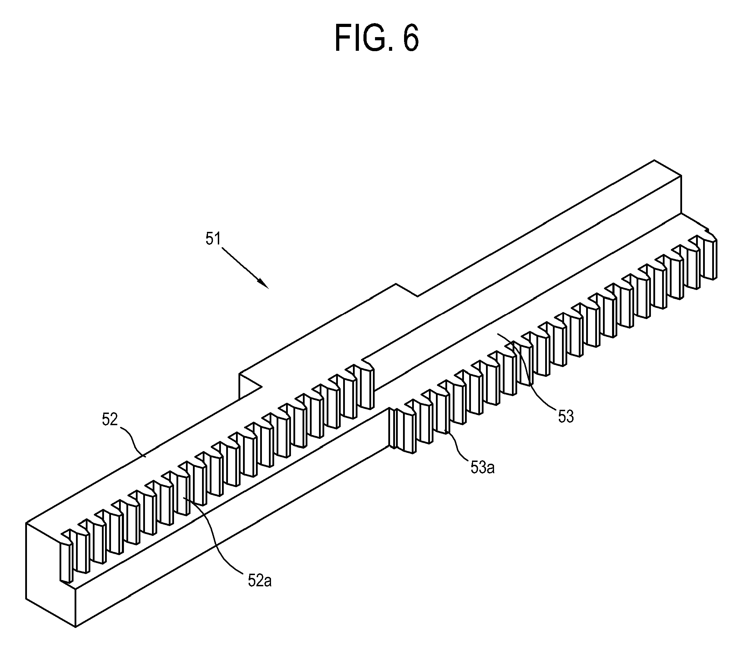

Referring to FIG. 6, a multi-stage rack gear 51 corresponds to the multi-stage spur gear 41 of FIG. 5. The multi-stage rack gear 51 includes a first rack gear train 52 arranged to engage with the first spur gear train 42, and a second rack gear train 53 arranged to engage with the second spur gear train 43.

The first rack gear train 52 includes a plurality of third gear teeth 52a which corresponds to the plurality of first gear teeth 42a. The second rack gear train 53 includes a plurality of fourth gear teeth 53a which corresponds to the plurality of second gear teeth 43a.

The first and second rack gear trains 52 and 53 of multi-stage rack gear 51 are positioned apart from each other so that they cannot be simultaneously engaged with the multi-stage spur gear 41.

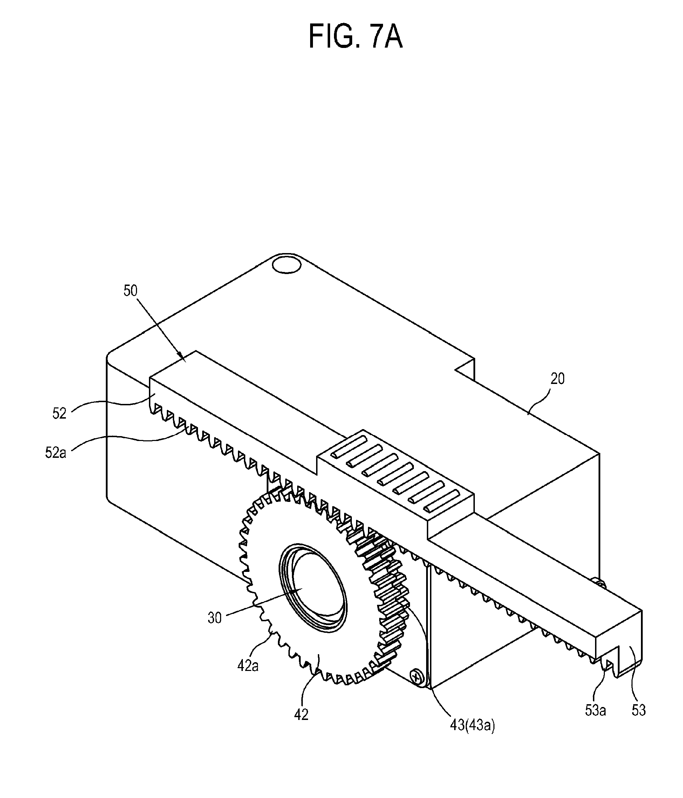

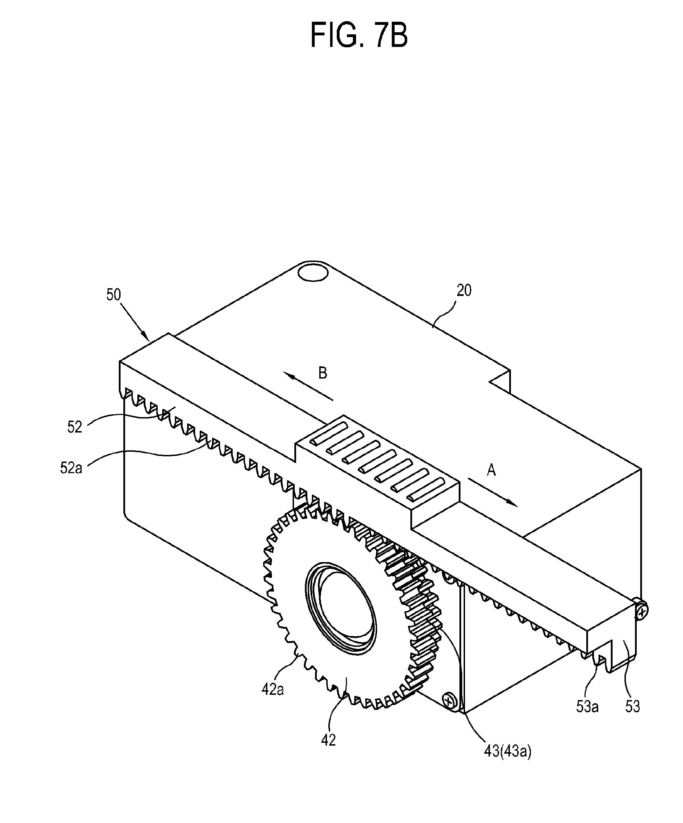

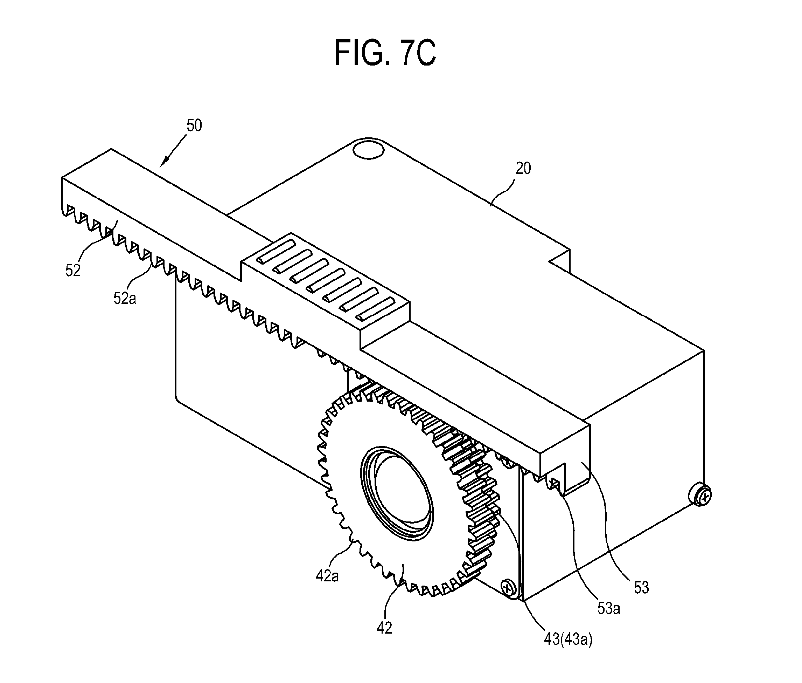

FIGs. 7A, 7B, and 7C are views for illustrating focus regulation obtained by using the spur gear of FIG. 5 and the rack gear of FIG. 6.

FIG. 7A is a view for illustrating the focus regulation when an image projected to a screen is larger than a reference-sized screen. In particular, FIG. 7A shows that the actuator 50 has been moved in an arrow direction A from a position illustrated in FIG. 7B. While the third gear teeth 52a of the first rack gear train 52 are engaged with the first gear teeth 42a of the first spur gear train 42, the projection lens unit 30 is rotated clockwise. At this point, the fourth gear teeth 53a of the second rack gear train 53 become disengaged from the second gear teeth 43a of the second spur gear train 43.

FIG. 7B is a view for illustrating the focus regulation when an image projected to the screen is equal to the reference-sized screen. As shown in FIG. 7B, the actuator 50 is in a state in which some third gear teeth 52a arranged in a boundary between the first rack gear train 52 and the second rack gear train 53 are engaged with the first gear teeth 42a, and/or some fourth gear teeth 53a are engaged with the second gear teeth 43a.

FIG. 7C is a view for illustrating the focus regulation when an image projected to the screen is smaller than the reference-sized screen. In particular, FIG. 7C shows that the actuator 50 has been moved in an arrow direction B from the position illustrated in FIG. 7B. While the fourth gear teeth 53a of the second rack gear train 53 are engaged with the second gear teeth 43a of the second spur gear train 43, the projection lens unit 30 is rotated counterclockwise. At this point, in contrast with the configuration illustrated in FIG. 7A, the third gear teeth 52a of the first rack gear train 52 become disengaged from the first gear teeth 42a of the first spur gear train 42.

As described above, and as illustrated, for example, in FIG. 5, the radius of the second spur gear train 43 is smaller than the radius of the first spur gear train 42, so that the respective magnitudes of angular rotation of the projection lens unit 30 can differ from each other even though the actuator 50 is moved in equal magnitudes of rectilinear distance in both the arrow directions of A and B. Accordingly, a clockwise rotation angle of the projection lens unit 30 when the focus is regulated for an image larger than the reference-sized screen is relatively smaller than a corresponding counterclockwise rotation angle of the projection lens unit 30 when the focus is regulated for an image correspondingly smaller than the reference-sized screen. In particular, a difference between the respective angular magnitudes of clockwise rotation and counterclockwise rotation of the projection lens unit 30 may be adjusted by changing a relative difference in a radius between the first and second spur gear trains 42 and 43.

In the exemplary embodiment described above, the first gear tooth 42a and the second gear tooth 43a have the same shape, size and arrangement, but are not limited thereto. Alternatively, the first gear tooth and the second gear tooth may have different tooth structures from each other, i.e., the respective shapes, sizes, and/or positional arrangements of the first gear tooth and the second gear tooth may be varied.

In the focus regulating apparatus for use with a projector according to an exemplary embodiment, when the actuator rectilinearly moves at a constant speed, the resulting rotation of the focus regulator is varied depending on the direction of rotation, such that a sensitivity to the focus regulation can be decreased due to a change from the reference-sized screen to a large-sized screen, thereby overcoming the asymmetry in the focus regulation when a screen size of the projector is adjusted. In particular, the spur gear and the rack gear, which have a structure of two-stage gear trains, are employed such that the rotation angle of the spur gear can be precisely controlled for the change from the reference-sized screen to the large-sized screen, by moving the actuator by a similar amount with respect to a relative degree of focus regulation for reducing the screen size.

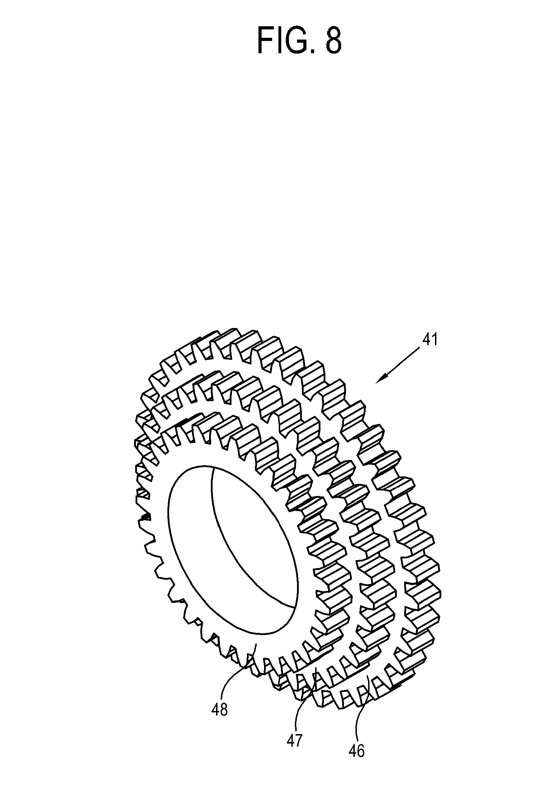

As shown in FIG. 8, the multi-stage spur gear 41 may include a first spur gear train 46 having a first radius, a second spur gear train 47 having a second radius that is not equal to the first radius, and a third spur gear train 48 having a third radius that is not equal to either of the first radius or the second radius. In particular, the first, second, and third spur gear trains 46, 47 and 48 are coaxially arranged, and the radius of the first spur gear train 46 is larger than that of the second spur gear train 47 and the radius of the second spur gear train 47 is larger than that of the third spur gear train 48. In some exemplary embodiments, respective pluralities of gear teeth of each of the first, second, and third spur gear trains 46, 47 and 48 may have the same shape, size and arrangement.

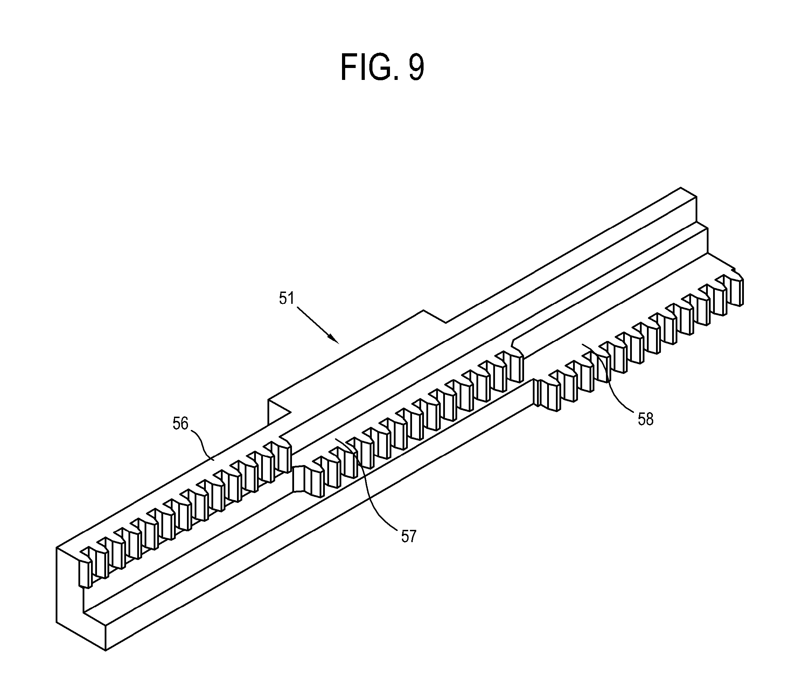

Referring to FIG. 9, the multi-stage rack gear 51, which corresponds to the multi-stage spur gear 41 of FIG. 8, includes a first rack gear train 56, a second rack gear train 57, and a third rack gear train 58, which are arranged to respectively engage with the first spur gear train 46, the second spur gear train 47, and the third spur gear train 48 as shown in FIG. 9.

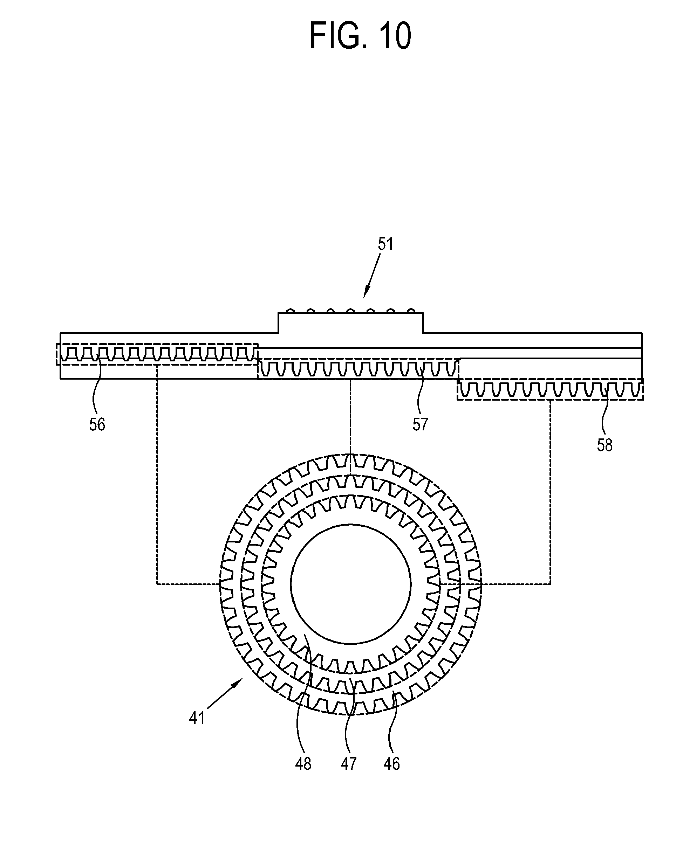

Referring to FIG. 10, in the multi-stage rack gear 51, the first, second, and third gear trains 56, 57 and 58 are positioned apart from one another so that each can respectively engage with the first, second, and third spur gear trains 46, 47 and 48 without overlap.

Thus, referring to FIG. 8, FIG. 9, and FIG. 10, the spur gear 41 and the rack gear 51, each of which has a respective structure of a three-stage gear train, are employed such that the rotation angle of the spur gear can be more precisely controlled as compared with the configuration described with reference to FIGs. 5 to 7C.

In the exemplary embodiments described above, the spur gear and the rack gear are configured as having respective structures of two-stage and three-stage gear trains, but these exemplary embodiments are not limited thereto. Alternatively, the spur gear and the rack gear may be configured having respective structures of gear trains having four or more stages.

Although a few exemplary embodiments have been shown and described, it will be appreciated by those skilled in the art that changes may be made in these exemplary embodiments without departing from the principles and spirit of the present inventive concept, the scope of which is defined in the appended claims and their equivalents.

## Claims

1. A focus regulating apparatus for use with a projector, the projector comprising a projector main body and a projection lens unit provided in the projector main body, and the apparatus comprising:
a focus regulator which is provided in the projection lens unit such that a focus is regulated by rotating a lens barrel of the projection lens unit; and
an actuator which gears with the focus regulator, wherein the actuator is configured to move rectilinearly with respect to the projector main body to cause the focus regulator to rotate,
wherein a rotation of the focus regulator is varied when the actuator rectilinearly moves at a constant speed.

2. The apparatus according to claim 1, wherein the focus regulator comprises a multi-stage spur gear comprising a first plurality of gear trains, each of the first plurality of gear trains having a different respective radius, and
the actuator comprises a multi-stage rack gear comprising a second plurality of gear trains, each of the second plurality of gear trains having a respective engaging section which engages with a corresponding one of the first plurality of gear trains.

3. The apparatus according to claim 2, wherein the multi-stage spur gear comprises a first spur gear train having a first radius; and a second spur gear train having a second radius different from the first radius, and
the multi-stage rack gear comprises a first rack gear train arranged to engage with the first spur gear train; and a second rack gear train positioned apart from the first rack gear train and arranged to engage with the second spur gear train.

4. The apparatus according to claim 2, wherein the multi-stage spur gear comprises a first spur gear train having a first radius, a second spur gear train having a second radius different from the first radius, and a third spur gear train having a third radius different from both of the first radius and the second radius, and
the multi-stage rack gear comprises a first rack gear train arranged to engage with the first spur gear train, a second rack gear train positioned apart from the first rack gear train and arranged to engage with the second spur gear train, and a third rack gear train positioned apart from both of the first and second rack gear trains and arranged to engage with the third spur gear train.

5. The apparatus claims 1 to 4, wherein the focus regulator and the actuator are configured such that a rotation angle of the focus regulator which corresponds to an image projected by the projection lens unit larger than a reference-sized screen by a predetermined proportion is smaller than a rotation angle of the focus regulator which corresponds to an image smaller than the reference-sized screen by the predetermined proportion.

6. A projector which projects an image to a screen, the projector comprising:
a projector main body;
a projection lens unit provided in the projector main body, the projection lens unit comprising a plurality of sheets of lenses and a lens barrel which supports the lenses; and
a focus regulating apparatus as claimed in any one of claims 1 through 5, which regulates a focus by rotating the lens barrel.
